**Europäisches Patentamt**

**European Patent Office**

**Office européen des brevets**

(19)

(11) Veröffentlichungsnummer: **0 080 022**
**B1**

(12) # EUROPÄISCHE PATENTSCHRIFT

(45) Veröffentlichungstag der Patentschrift:
**12.03.86**

(51) Int. Cl.⁴: **H 02 K 33/18,** H 02 K 33/10,
G 05 D 19/02

(21) Anmeldenummer: **82107027.3**

(22) Anmeldetag: **04.08.82**

(54) **Schwenkvorrichtung.**

(30) Priorität: **20.11.81 CH 7446/81**

(43) Veröffentlichungstag der Anmeldung:
**01.06.83 Patentblatt 83/22**

(45) Bekanntmachung des Hinweises auf die Patenterteilung:
**12.03.86 Patentblatt 86/11**

(84) Benannte Vertragsstaaten:
**CH DE FR GB LI NL**

(56) Entgegenhaltungen:
**FR - A - 1 591 317
GB - A - 723 418
US - A - 2 106 058
US - A - 3 040 223
US - A - 3 123 728
US - A - 3 346 792
US - A - 3 784 888**

(73) Patentinhaber: **SIEMENS-ALBIS
AKTIENGESELLSCHAFT, EGA1/Verträge und Patente
Postfach, CH-8047 Zürich (CH)**

(72) Erfinder: **Fosco, Guido, Langäckerstrasse 1,
CH-8957 Spreitenbach (CH)**
Erfinder: **Schmutz, Karl, Schneebelistrasse 1,
CH-8048 Zürich (CH)**

## Beschreibung

Die vorliegende Erfindung betrifft eine Schwenkvorrichtung gemäss dem Oberbegriff des Patentanspruches 1.

Eine solche Schwenkvorrichtung ist grundsätzlich aus der GB-A-723,418 bekannt. In dieser Vorrichtung sorgt die über den induktiven Weggeber gesteuerte Regelschaltung dafür, dass dem elektromechanischen Antrieb soviel elektrische Energie zugeführt wird, wie von ihm mechanisch abgegeben wird. Mit dieser Vorrichtung, in der eine Tauchspule als Weggeber verwendet wird und dem regelbaren Verstärker ein Leistungsverstärker nachgeschaltet ist, kann entweder die Beschleunigung einer Vibrations-Platte oder die maximale Geschwindigkeit derselben zumindest angenähert konstant gehalten werden. Weiterhin ist in der US-PS 3,346,792 ein kollektorloser Motor beschrieben, dessen Steuerung einen variablen Kondensator als Weggeber und eine Gleichrichterschaltung aufweist. Diese Steuerung wurde mit dem Zweck entwickelt, einen rotierenden, selbststartenden Motor zu schaffen. Demgegenüber liegt der vorliegenden Erfindung die Aufgabe zugrunde, eine Schwenkvorrichtung anzugeben, mit deren Hilfe eine grosse Genauigkeit der Eigenresonanzfrequenz und der winkelproportionalen Ausgangsspannung erreicht werden kann.

Diese Aufgabe wird erfindungsgemäss durch die im kennzeichnenden Teil des Patentanspruches 1 angegebenen Massnahmen gelöst. Vorteilhafte Ausgestaltungen der Erfindung sind in weiteren Ansprüchen angegeben.

Die Erfindung wird nachfolgend durch Beschreibung von Ausführungsbeispielen anhand von Zeichnungen näher erläutert. Es zeigt:

Fig. 1 einen Schwenkanker mit einer zwischen zwei Kondensatorplättchen schwenkbar angeordneten Fahne,

Fig. 2 eine erfindungsgemässe Regelschaltung,

Fig. 3 bis 5 den Aufbau der Kondensator- und Abschirmplättchen eines kapazitiven Weggebers.

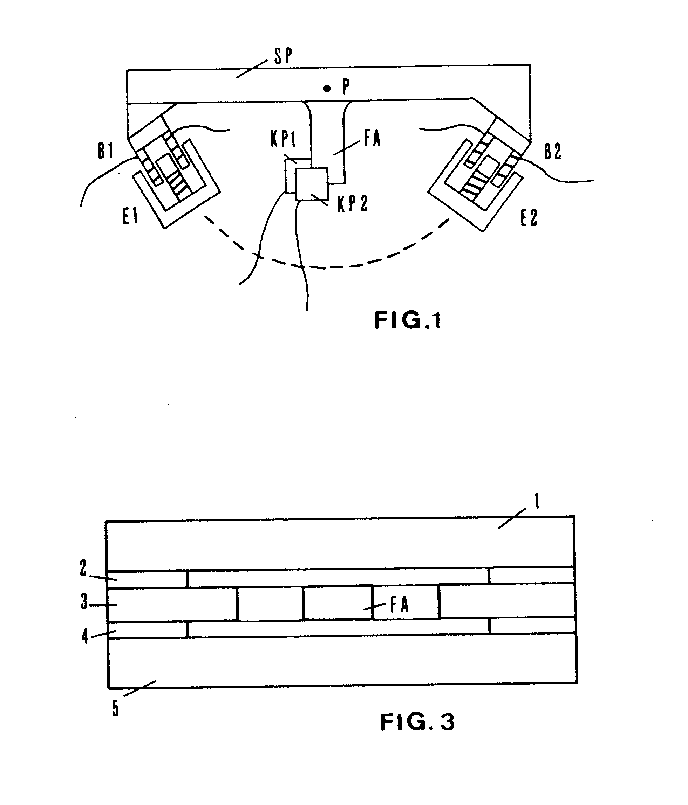

Der Schwenkanker nach Fig. 1 weist eine um eine Drehachse P schwenkbare Schwenkplatte SP auf, die mit einer dünnen Fahne FA sowie mit zwei Erregerspulen B1 und B2 versehen ist, die bei der Schwenkbewegung reibungslos koaxial in den Luftspalt je eines magnetischen Kreises E1 und E2 eintauchen. Dabei befinden sich die Symmetrieachsen der Spulen B1 und B2 in einer Halbebene, die senkrecht zur Drehachse P liegt und die mit der Symmetriehalbebene der Fahne FA übereinstimmt, die zwischen zwei Kondensatorplättchen KP1, KP2 und parallel zu deren Flachseiten schwenkbar angeordnet ist. Auf der freien Aussenseite der Schwenkplatte SP kann beispielsweise eine Radarantenne oder der Spiegel für die Infrarotstrahlung eines Wärmebildgerätes angeordnet sein, wobei gegebenenfalls die Aussenseite der Schwenkplatte SP selbst als spiegelnde Fläche ausgebildet sein kann. Die Fahne FA kann metallisch oder aus dielektrischem Material sein.

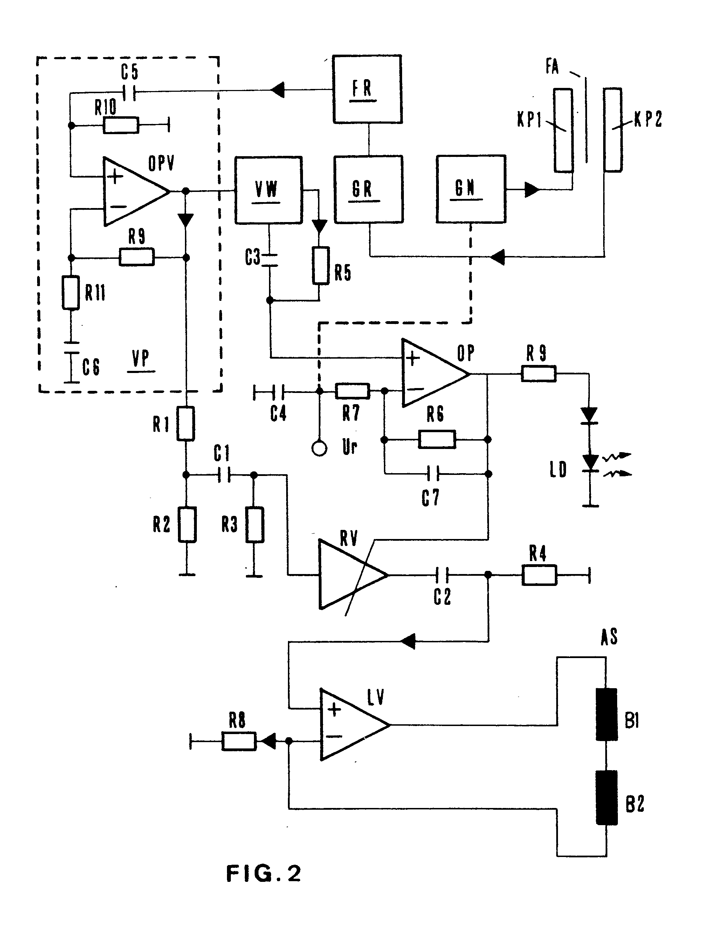

Die Regelschaltung nach Fig. 2 weist einen Signalgenerator GN auf, dessen Ausgang mit dem einen der beiden Kondensatorplättchen KP1 verbunden ist. Dabei ist das andere Kondensatorplättchen KP2 über die Reihenschaltung eines Gleichrichters GR und eines Filters FR mit dem Eingang einer Verstärkerschaltung VP verbunden, deren Ausgang über die Reihenschaltung eines Spannungsteilers R1, R2, eines ersten Hochpasses C1, R3, eines regelbaren Verstärkers RV und eines zweiten Hochpasses C2, R4 an den nichtinvertierenden Eingang eines Leistungsverstärkers LV angeschlossen ist. Der Ausgang der Verstärkerschaltung VP ist zudem über die Reihenschaltung eines Vollweggleichrichters VW und eines Tiefpasses R5, C3 mit dem nichtinvertierenden Eingang eines Operationsverstärkers OP verbunden, dessen Ausgangssignal dem Steuereingang des regelbaren Verstärkers RV zugeführt wird. Dabei ist ein Widerstand R6 zwischen dem Ausgang des Operationsverstärkers OP und seinem invertierenden Eingang eingefügt, der zudem über einen Widerstand R7 einerseits mit einer Referenzspannungsquelle Ur und andererseits über einen Kondensator C4 mit einem Bezugspotentialanschluss verbunden ist. Zwischen dem Ausgang und dem invertierenden Eingang des Leistungsverstärkers LV ist die Reihenschaltung der Erregerspulen B1 und B2 (Fig. 1) eingefügt. Dabei ist dieser invertierende Eingang über einen stromstabilisierenden Widerstand R8 an das Bezugspotential angeschlossen. Der Ausgang des Operationsverstärkers OP ist schliesslich über die Reihenschaltung eines Widerstandes R9 und einer Leuchtdiode LD mit dem Bezugspotentialanschluss verbunden. Die Verstärkerschaltung VP weist einen Operationsverstärker OPV auf, zwischen dessen Ausgang und dessen invertierendem Eingang ein Widerstand R9 eingefügt und dessen nichtinvertierendem Eingang eingangsseitig ein Hochpass C5, R10 vorgeschaltet ist, wobei der invertierende Eingang des Operationsverstärkers OPV über die Reihenschaltung eines Widerstandes R11 und eines Kondensators C6 an das Bezugspotential angeschlossen ist.

Die Regelschaltung nach Fig. 2 funktioniert folgendermassen:

Der Signalgenerator GN erzeugt ein Sinussignal, dessen Frequenz fo viel grösser als die Eigenresonanzfrequenz fr des Schwenkankers ist. Dieses Sinussignal gelangt als Verschiebungsstrom über die Kondensatorplättchen KP1 und KP2 zum Eingang des Gleichrichters GR. Durch die Schwenkbewegung der Fahne FA entsteht eine periodische Veränderung der Kapazität des durch die Kondensatorplättchen KP1 und KP2 gebildeten Kondensators, wodurch ein amplitudenmoduliertes Signal am Eingang des Gleichrichters GR vorliegt, das von diesem gleichgerichtet wird und als demoduliertes Signal der Frequenz fr am Ausgang des Filters FR erscheint.

Die durch diese Demodulation bewirkte unerwünschte Phasendrehung des Signals wird durch die RC-Glieder R10, C5 und C6, R11 der Verstärkerschaltung VP zumindest angenähert kompensiert, die zudem ein verstärktes Signal Ua abgibt, das eine grosse winkelproportionale Genauigkeit aufweist. Der Vollweggleichrichter VW arbeitet in der Weise, dass er negative Eingangsspannungen nichtinvertiert und positive Eingangsspannungen invertiert weitergibt. Ein solcher Vollweggleichrichter ist beispielsweise in U. Tietze und Ch. Schenk, «Halbleiter-Schaltungstechnik» Springer 1978, Seite 656 f. angegeben. Der Operationsverstärker OP arbeitet als Differenzverstärker, in dem ein Istwert an seinem nichtinvertierenden Eingang mit einem einstellbaren Sollwert an seinen invertierenden Eingang verglichen wird, wobei dieser Istwert dem Wert einer durch die Wirkung des Kondensators C3 geglätteten Spannung entspricht. Zur Vermeidung von Unstabilitäten kann der Verstärkungsfaktor dieses Operationsverstärkers OP durch den Widerstand R6 und/oder einen ihm parallelgeschalteten Kondensator C7 verringert werden.

Das Signal am Eingang des Verstärkers RV ist ein von seiner Gleichstromkomponente befreites Sinussignal der Frequenz fr, das von ihm nach Massgabe des Ausgangssignals des Operationsverstärkers OP variabel verstärkt wird. Die Hochpässe C1, R3 und C2, R4 bewirken je eine Phasendrehung von 45°, wodurch der vom Leistungsverstärker LV verstärkte Antriebsstrom für die Erregerspulen B1 und B2 eine Phasenverschiebung von 90° gegenüber dem demodulierten Signal am Ausgang des Operationsverstärkers OP aufweist. Somit werden jeweils die Erregerspulen in der Zeit zwischen zwei aufeinanderfolgenden Scheitelwerten der Schwenkbewegung erregt.

Die Referenzspannung Ur kann zweckmässigerweise proportional zur Amplitude des Ausgangssignals des Generators GN sein.

Die Schwenkvorrichtung nach Fig. 1 und 2 erweist sich als vorteilhaft insbesondere im Hinblick auf den kapazitiven Weggeber, dessen Kapazität für jeden Winkel genau bestimmt ist.

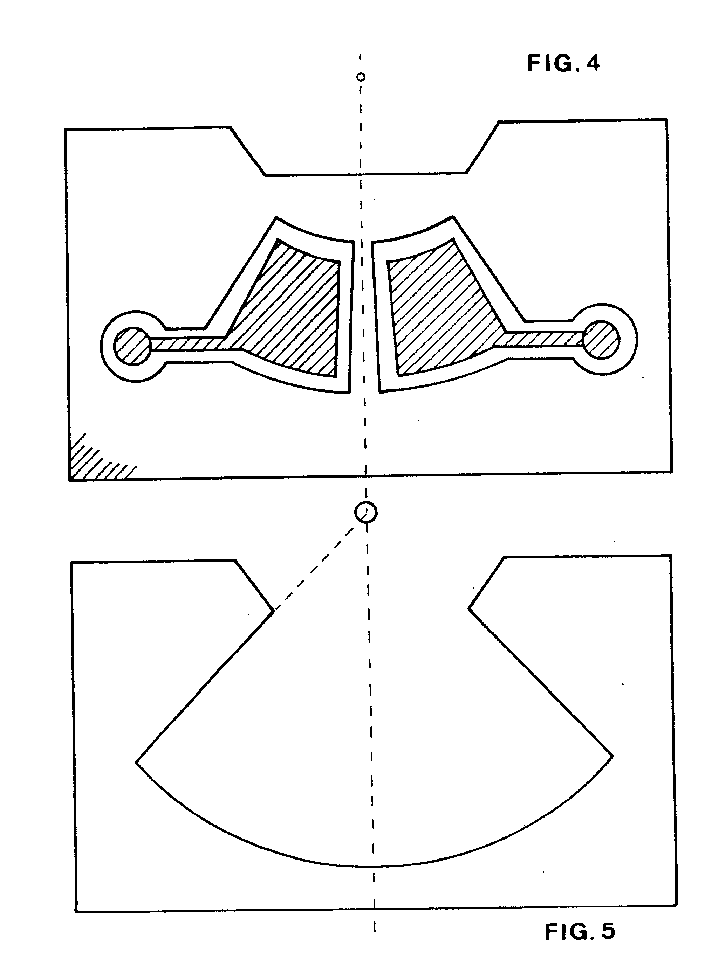

Fig. 3 zeigt den Aufbau der zwei als gedruckte Schaltungen ausgebildeten Kondensatorplättchen 1 und 5, zwischen denen sich die Fahne FA und das Abschirmplättchen 3 befinden, an deren beiden Seiten jeweils ein Distanzblech 2 bzw. 4 angeordnet ist.

Fig. 4 zeigt eine der gedruckten Schaltungen 1 oder 5 mit zwei leitenden Flächen F1, F2, die zur Bildung eines kapazitiven Doppelweggebers eingesetzt werden können. Die Regelschaltung nach Fig. 1 arbeitet nur mit je einer aktiven Fläche einer gedruckten Schaltung. Zum Betrieb eines solchen Doppelweggebers, durch den die Genauigkeit der Eigenresonanzfrequenz erhöht wird, kann die Regelschaltung einen zusätzlichen Differenzverstärker aufweisen, dessen invertierender Eingang mit der einen aktiven Fläche F1 und dessen nichtinvertierender Eingang mit der anderen aktiven Fläche F2 ein und derselben gedruckten Schaltung verbunden ist, wobei das Ausgangssignal dieses Differenzverstärkers dem Eingang des Gleichrichters GR oder gegebenenfalls dem Eingang eines Synchrondemodulators zugeführt wird. Dabei können die aktiven Flächen der anderen gedruckten Schaltung gemeinsam mit dem Ausgang des Signalgenerators GN verbunden sein. Ein solcher Synchrondemodulator kann beispielsweise über einen Schmitt-Trigger mit dem Ausgangssignal des Signalgenerators GN synchronisiert werden.

Das in Fig. 5 dargestellte Abschirmplättchen weist eine kreissektorförmige Aussparung auf, in die hineinragend die Fahne ungehindert ihre Schwenkbewegung folgen kann.

Sowohl der Weggeber als auch der Doppelweggeber können als quasistatische Winkelgeber betrachtet werden, wobei eventuell vorhandene Offset-Spannungen leicht zu kompensieren sind.

Schliesslich sei noch erwähnt, dass der Weggeber und/oder die elektrischen Zuleitungen zum Weggeber abgeschirmt sein können. Derartige Abschirmungen sind beispielsweise aus der US-A-2,106,058 bekannt.

**Patentansprüche**

1. Schwenkvorrichtung mit einer elektronischen Regelschaltung zum Ausgleichen der Energieverluste des elektromechanischen Antriebs eines mit Eigenresonanzfrequenz arbeitenden, federnd gelagerten Schwenkankers, wobei die Regelschaltung einen Signalgenerator (GN) aufweist, dessen Ausgangssignal über die Reihenschaltung eines Weggebers, eines Gleichrichters (GR) und eines Filters (FR) dem Eingang eines regelbaren Verstärkers (RV) zugeführt wird, dessen Ausgang den Strom zur Ausgleichung der Energieverluste liefert, dadurch gekennzeichnet, dass als Weggeber ein mit der Schwenkbewegung variabler Kondensator (KP1, FA, KP2) wirkt, über den ein Signal geführt wird, dessen Frequenz (fo) viel höher als die Eigenresonanzfrequenz (fr) ist, dass der Ausgang des Filters (FR) mit dem Eingang einer Verstärkerschaltung (VP) verbunden ist, die zumindest angenähert eine Phasenverschiebungskompensation bewirkt, und dass das Ausgangssignal der Verstärkerschaltung (VP) einerseits über einen Vollweggleichrichter (VW) dem einen Signaleingang eines Operationsverstärkers (OP) und andererseits über ein weiteres Filter (C1, R3) dem Eingang des regelbaren Verstärkers (RV) zugeführt wird, dessen Steueranschluss an den Ausgang des Operationsverstärkers (OP) angeschlossen ist, wobei dem anderen Signaleingang des Operationsverstärkers (OP) eine Referenzspannung (UR) zugeführt wird.

2. Schwenkvorrichtung nach Anspruch 1, dadurch gekennzeichnet, dass als Referenzspannung (Ur) eine Spannung gewählt wird, die proportional zur Amplitude des Ausgangssignals des Signalgenerators (GN) ist.

3. Schwenkvorrichtung nach Anspruch 1 oder 2, dadurch gekennzeichnet, dass dem regelbaren Verstärker (RV) ein Leistungsverstärker (LV) nachgeschaltet ist.

4. Schwenkvorrichtung nach einem der Ansprüche 1, 2 oder 3, dadurch gekennzeichnet, dass im Weggeber mindestens eine gedruckte Schaltung vorhanden ist, die eine leitende Fläche aufweist, zu der parallel eine Fahne schwenkbar angeordnet ist.

5. Schwenkvorrichtung nach einem der Ansprüche 1 bis 4, dadurch gekennzeichnet, dass der Weggeber abgeschirmt ist.

6. Schwenkvorrichtung nach Anspruch 5, dadurch gekennzeichnet, dass die elektrischen Zuleitungen zum Weggeber abgeschirmt sind.

## Claims

1. A pivotting device with an electronic regulating circuit for the compensation of energy losses in the electro-mechanical drive of a spring-mounted pivot armature which operates at a self-resonant frequency, where the regulating circuit has a signal generator (GN) whose output signal is fed via the series arrangement of a path pick-up, a rectifier (GR), and a filter (FR) to the input of a regulatable amplifier (RV) whose output supplies the current for the compensation of the energy losses, characterised in that the path pick-up consists of a variable capacitor (KP1, FA, KP2) controlled by the pivot movement, which supplies a signal whose frequency (fo) is much higher than the self-resonant frequency (fr), that the output of the filter (FR) is connected to the input of an amplifier circuit (VP) which at least approximately effects a phase-shift compensation, and that the output signal from the amplifier circuit (VP) is fed on the one hand via a full-wave rectifier (VW) to the first signal input of an operational amplifier (OP) and on the other hand via a further filter (C1, R3) to the input of the regulatable amplifier (RV), whose control terminal is connected to the output of the operational amplifier (OP), the other signal input of the operational amplifier (OP) being supplied with a reference voltage (UR).

2. A pivotting device as claimed in Claim 1, characterised in that the reference voltage (Ur) is a voltage proportional to the amplitude of the output signal of the signal generator (GN).

3. A pivotting device as claimed in Claim 1 or Claim 2, characterised in that the output of the regulatable amplifier (RV) is connected to a power amplifier (LV).

4. A pivotting device as claimed in one of Claims 1, 2 or 3, characterised in that the path pick-up contains at least one printed circuit which has a conductive surface to which a lug is pivotably arranged in parallel.

5. A pivotting device as claimed in one of Claims 1 to 4, characterised in that the path pick-up is shielded.

6. A pivotting device as claimed in Claim 5, characterised in that the electrical supply lines to the path pick-up are shielded.

## Revendications

1. Dispositif oscillant comportant un circuit de réglage électronique servant à compenser les pertes d'énergie du dispositif d'entraînement électromécanique d'une armature oscillante suspendue élastiquement et opérant à la fréquence de résonance naturelle, le circuit de réglage comportant un générateur de signaux (GN), dont le signal de sortie est envoyé par l'intermédiaire du circuit série formé d'un capteur des distances, d'un redresseur (GR) et d'un filtre (FR) à l'entrée d'un amplificateur réglable (RV), dont la sortie fournit le courant servant à compenser les pertes d'énergie, caractérisé par le fait qu'on utilise comme capteur de déplacement, un condensateur (KP1, FA, KP2), variable avec le déplacement oscillatoire, et au moyen duquel se trouve délivré un signal dont la fréquence (fo) est nettement supérieure à la fréquence de résonance naturelle (fr), que la sortie de filtre (FR) est reliée à l'entrée d'un circuit amplificateur (VP) qui réalise au moins approximativement une compensation du déphasage, et que le signal de sortie du circuit amplificateur (VP) est envoyé d'une part par l'intermédiaire d'un redresseur double alternance (VW) à une entrée des signaux d'un amplificateur opérationnel (OP) et est envoyé d'autre part par l'intermédiaire d'un autre filtre (C1, R3) à l'entrée de l'amplificateur réglable (RV), dont la connexion de commende est raccordée à la sortie de l'amplificateur opérationnel (OP), une tension de référence (UR) étant envoyée à l'autre entrée des signaux de l'amplificateur opérationnel (OP).

2. Dispositif oscillant suivant la revendication 1, caractérisé par le fait qu'on choisit comme tension de référence (Ur) une tension qui est proportionnelle à l'amplitude du signal de sortie du générateur de signaux (GN).

3. Dispositif oscillant suivant la revendication 1 ou 2, caractérisé par le fait qu'un amplificateur de puissance (LV) est branché en aval de l'amplificateur réglable (RV).

4. Dispositif oscillant suivant l'une des revendications 1, 2 ou 3, caractérisé par le fait qu'il est prévu dans le capteur des distances, au moins un circuit imprimé qui possède une surface conductrice parallèlement à laquelle se trouve disposée une languette apte à pouvoir pivoter.

5. Dispositif oscillant suivant l'une des revendications 1 à 4, caractérisé par le fait que le capteur des distances est blindé.

5. Dispositif oscillant suivant la revendication 5, caractérisé par le fait que les conducteurs d'alimentation électriques aboutissant au capteur de distance sont blindés.

SP

• P

B1    KP1    FA    B2

E1    KP2    E2

**FIG.1**

1

2

3    FA

4

5

**FIG. 3**

FIG. 2

**FIG. 4**

**FIG. 5**